# FASCICULE DE BREVET EUROPEEN

(11) **EP 2 057 071 B1**
(45) Date de publication et mention de la délivrance du brevet: **02.11.2011**
(21) Numéro de dépôt: 07803822.1
(22) Date de dépôt: 02.07.2007
(51) Int. Cl.: B64D 29/06

(54) **SYSTEME DE VERROUILLAGE POUR CAPOT MOBILE DE NACELLE**
VERSCHLUSSSYSTEM FÜR EINE BEWEGLICHE GONDELVERKLEIDUNG
LOCKING SYSTEM FOR A MOVABLE NACELLE COWL

(30) Priorité: 31.08.2006 FR 0607647
(43) Date de publication de la demande: 13.05.2009
(73) Titulaire: Aircelle, 76700 Gonfreville L'Orcher (FR)
(72) Inventeur: VAUCHEL, Guy Bernard, F-76610 Le Havre (FR); BOURET, Georges Alain, F-76133 Epouville (FR)
(74) Mandataire: Jouanneau, Lionel
(86) Numéro de dépôt international: PCT/FR2007/001113
(87) Numéro de publication internationale: WO 2008/025890

(56) Documents cités:
- EP-A- 0 823 373
- CA-A1- 2 103 995
- GB-A- 2 408 066
- US-A- 5 100 186
- US-A- 5 203 525
- US-B1- 6 220 546
- US-B1- 6 340 135
- US-B1- 6 517 027

## Description

La présente invention se rapporte à un système de verrouillage pour capot mobile latéral d'une nacelle de turboréacteur destinée à être reliée à un pylône d'un aéronef, comprenant, d'une part, une chape destinée à être reliée au pylône, et d'autre part, une tringle destinée à être montée sur le capot mobile et apte à s'engager avec la chape lorsque le capot mobile est en position de fermeture.

Un avion est propulsé par plusieurs turboréacteurs logés chacun dans une nacelle abritant également un ensemble de dispositifs d'actionnement annexes liés à son fonctionnement, tel qu'un dispositif d'inversion de poussée, et assurant diverses fonctions lorsque le turboréacteur est en fonctionnement ou à l'arrêt.

Une nacelle présente généralement une structure tubulaire comprenant une entrée d'air en amont du turboréacteur, une section médiane destinée à entourer une soufflante du turboréacteur, une section aval abritant des moyens d'inversion de poussée et destinée à entourer la chambre de combustion du turboréacteur, et est généralement terminée par une tuyère d'éjection dont la sortie est située en aval du turboréacteur.

Les nacelles modernes sont destinées à abriter un turboréacteur double flux apte à générer par l'intermédiaire des pâles de la soufflante en rotation un flux d'air chaud (également appelé flux primaire) issu de la chambre de combustion du turboréacteur, et un flux d'air froid (flux secondaire) qui circule à l'extérieur du turboréacteur à travers un passage annulaire, également appelé veine, formé entre un carénage du turboréacteur (ou une structure interne de la structure aval de la nacelle et entourant le turboréacteur) et une paroi interne de la nacelle. Les deux flux d'air sont éjectés du turboréacteur par l'arrière de la nacelle.

Chaque ensemble propulsif de l'avion est donc formé par une nacelle et un turboréacteur, et est suspendu à une structure fixe de l'avion, par exemple sous une aile ou sur le fuselage, par l'intermédiaire d'un pylône rattaché au turboréacteur ou à la nacelle.

La nacelle est généralement équipée de capots mobiles pouvant s'ouvrir pour permettre un accès au turboréacteur lors d'opérations de maintenance. Ces capots mobiles sont généralement situés au niveau de la section médiane entourant la soufflante ou du générateur de gaz du turboréacteur, bien que ces derniers puissent être remplacés par des capots de l'inverseur de poussée.

De manière habituelle, ces capots présentent une courbure adaptée à l'environnement du turboréacteur lui permettant de s'intégrer dans la nacelle et d'en assurer la continuité aérodynamique en position de fermeture. Ils sont généralement rattachés au pylône supportant la nacelle par des moyens d'attache permettant leur articulation autour d'un axe sensiblement parallèle à un axe longitudinal de la nacelle et présentent un bord inférieur équipé de moyens de verrouillage permettant leur maintien en position de fermeture lors d'opérations de vol.

La manoeuvre d'ouverture des capots s'effectue après ouverture des moyens de verrouillage en les faisant pivoter autour des moyens d'attache solidaires du pylône.

Les capots, pour des raisons par exemples liées à l'accessibilité au turboréacteur ou au mât, pourraient être rapportés ou articulés différemment dans une zone autre qu'une zone située sous le mât de l'avion, notamment autour d'un axe sensiblement perpendiculaire à l'axe longitudinal de la nacelle. Un tel changement d'emplacement entraîne généralement un problème de liaison de ces capots avec la structure de l'aéronef ou avec la nacelle elle-même. En effet, la configuration actuelle de montage de structure de la nacelle utilise les points d'articulation des capots comme points de liaison structurale parfois en association avec une liaison couteau du capot avec une gorge périphérique du carter de la soufflante.

Un tel mode d'ouverture de capots mobiles formés par des demi-parties d'une structure d'inversion de poussée est décrite dans la demande de brevet EP 1 984 248, qui appartient à l'état de la technique selon l'article 54(3) de la CBE ou dans le brevet US 6,220,546 B1.

L'accrochage pivotant des capots en un autre endroit de la nacelle ne permet plus l'utilisation des moyens d'accrochage pivotants précédemment décrits comme lien structural des capots, et plus généralement de la structure de la nacelle, sur le pylône.

La présente invention vise à pallier les inconvénients précédemment évoqués, et consiste pour cela en un ensemble selon la revendication 1.

Ainsi, en prévoyant un système de verrouillage amovible destiné à assurer une liaison entre le pylône et le capot mobile, ce système permet d'assurer la liaison structurale manquante tout en permettant son désengagement lorsque cela est nécessaire de manière à pouvoir ouvrir le capot mobile.

Avantageusement, la chape présente une entrée tronconique. Une telle entrée permet un auto-centrage de la chape avec la tringle lorsque celle-ci est amenée en position de verrouillage.

De manière préférentielle, le système de verrouillage est équipé de moyens d'entraînement de la tringle et comprend de manière avantageuse des moyens de commande mécanique à distance de la tringle.

Avantageusement, les moyens d'entraînement comprennent au moins un élément de motorisation électrique et le système de verrouillage comprend alors avantageusement des moyens électriques de commande à distance de la tringle.

Avantageusement encore, le système de verrouillage comprend au moins un capteur de position de la tringle apte à être relié à au moins un moyen de signalisation associé.

De manière préférentielle, le système de verrouillage comprend un oeillet solidaire du capot mobile et apte à recevoir une extrémité de la tringle lorsque celui-ci est en position de verrouillage et a traversé la chape.

Avantageusement, la chape est associée à un pion de centrage apte à coopérer avec un alésage correspondant dans le capot mobile, de préférence présentant une entrée tronconique. L'entrée tronconique permet un auto-centrage du pion de centrage.

Préférentiellement, le capot mobile appartient à une structure d'inverseur de poussée.

La présente invention se rapport également à un ensemble propulsif **caractérisé en ce qu'**il comprend une nacelle selon l'invention abritant un turboréacteur rattaché à un pylône équipé des éléments complémentaires du système de verrouillage du capot mobile selon l'invention.

Selon une première variante de réalisation, l'ensemble comprend au moins une chape fixée dans le pylône.

Selon une deuxième variante de réalisation, l'ensemble comprend au moins une chape liée au pylône par l'intermédiaire d'une liaison flottante apte à permettre un déplacement de jeu fonctionnel selon au moins une direction.

Avantageusement, le jeu fonctionnel maximum autorisé selon une direction transversale à la direction de déplacement de la liaison flottante est inférieur au diamètre d'entrée de la chape.

De manière préférentielle, les systèmes de verrouillage situés à proximité de la soufflante comprennent une chape montée sur une liaison flottante.

La mise en oeuvre de l'invention sera mieux comprise à la l'aide de la description détaillée qui est exposée ci-dessous en regard du dessin annexé dans lequel :
La figure 1 est une représentation schématique partielle d'une nacelle selon l'invention présentant des capots mobiles latéraux arrière appartenant à une structure d'inverseur.
La figure 2 est une représentation schématique en coupe transversale de la nacelle de la figure 1 selon la ligne II-II.
La figure 3 est une représentation schématique en coupe transversale de la nacelle de la figure 1 selon la ligne III-III.
La figure 4 est une représentation schématique en coupe longitudinale d'un premier mode de réalisation d'un système de verrouillage selon l'invention, dans sa position de verrouillage.
La figure 5 est une représentation du système de verrouillage de la figure 4 dans sa position de déverrouillage.
La figure 6 est une représentation schématique en coupe longitudinale d'un deuxième mode de réalisation d'un système de verrouillage selon l'invention, dans sa position de verrouillage.
La figure 7 est une représentation du système de verrouillage de la figure 6 dans sa position de déverrouillage.
La figure 8 est une représentation d'un troisième mode de réalisation d'un système de verrouillage selon l'invention.
La figure 9 est une représentation d'une variante de réalisation du système de verrouillage des figures 6 et 7 comprenant une chape montée fixe dans le pylône.

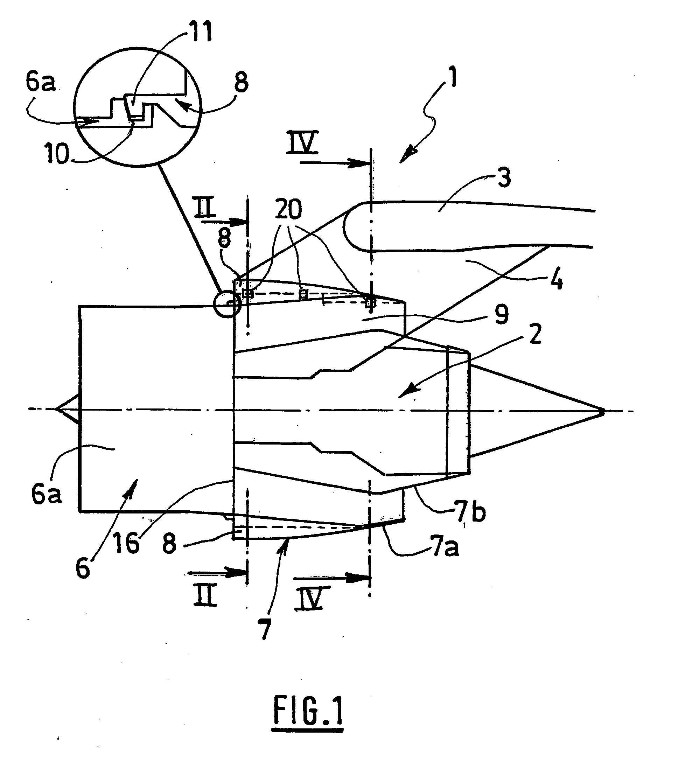

La figure 1 représente une vue partielle d'une nacelle 1 selon l'invention pour un turboréacteur 2 double flux.

La nacelle 1 constitue un logement tubulaire pour un turboréacteur 2 double flux et sert à canaliser les flux d'air qu'il génère par l'intermédiaire des pâles d'une soufflante (non visible), à savoir un flux d'air chaud traversant une chambre de combustion 4 du turboréacteur 2, et un flux d'air froid circulant à l'extérieur du turboréacteur 2.

Chaque ensemble propulsif de l'avion est donc formé par une nacelle 1 et un turboréacteur 2, et est suspendu à une structure fixe de l'avion, par exemple sous une aile 3 ou sur le fuselage, par l'intermédiaire d'un pylône 4 rattaché au turboréacteur 2.

La nacelle 1 possède une structure comprenant une section avant (non représentée) formant une entrée d'air, une section médiane 6 entourant la soufflante (non visible) du turboréacteur 2, et une section arrière 7 entourant le turboréacteur 2 et comprenant un système d'inversion de poussée.

La section médiane 6 comprend, d'une part, un carter 6a interne entourant la soufflante du turboréacteur 2, et d'autre part, une structure externe (non représentée) de carénage du carter prolongeant une surface externe de la section d'entrée d'air. Le carter 6a est rattaché à la section d'entrée d'air qu'elle supporte et prolonge une surface interne de cette dernière.

La section arrière 7 prolonge la section médiane 6 et comprend une structure externe 7a comprenant le système d'inversion de poussée formant une tuyère d'éjection et une structure interne 7b de carénage du turboréacteur 2 définissant avec la structure externe 7a une veine 9 destinée à la circulation du flux froid.

Plus précisément, la section arrière 7 est réalisée sous la forme de deux demi-parties 8 latérales situées de part et d'autre de la nacelle 1 formant des capots mobiles.

L'ensemble de la structure externe 7a de la section arrière 7 et de la structure interne 7b de chaque demi-partie est supporté par un cadre avant 16 lui-même supporté par le carter 6a avec lequel il est monté pivotant par l'intermédiaire de charnières (non visibles) disposées selon un axe sensiblement perpendiculaire à un axe longitudinal de la nacelle.

L'actionnement de chaque demi-partie 8 pourra classiquement être effectué par des vérins possédant une première extrémité fixe ancrée sur le carter et une deuxième extrémité rattachée au cadre avant par une liaison rotule.

La liaison mécanique entre les demi-parties 8 et le reste de la nacelle 1 est complétée par un système gorge 10 / couteau 11 d'une partie étendue de la périphérie extérieure du carter 6b de la soufflante et dont un agrandissement un visible sur la figure 1, la gorge étant généralement située un bord du carter 6b et le couteau faisant partie de la structure arrière 7b.

Comme expliqué précédemment, la position des charnières ne permet plus leur utilisation comme lien structural de la structure arrière 7 avec le pylône 4.

Pour ce faire, chaque demi-partie comprend un bord supérieur 13 et un bord inférieur 14 respectivement équipés de systèmes de verrouillage 20 selon l'invention aptes à permettre une liaison entre le pylône 4 et la demi-partie 8 correspondante, et de verrous (non visibles) permettant de lier entre eux les bords inférieurs 14 des deux demi-parties.

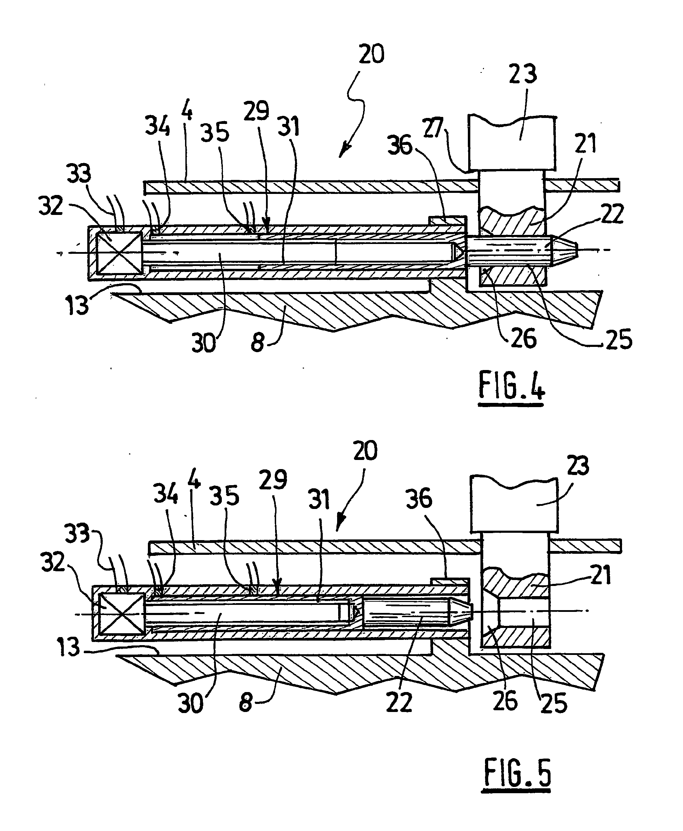

Le bord supérieur 13 de chaque demi partie 8 est équipé de trois systèmes de verrouillage 20 selon l'invention dans plusieurs variantes de réalisation représentées sur les figures 4 à 9. Ces systèmes de verrouillage 20 peuvent être alignés ou, comme représenté sur la figure 1, légèrement en décalage aussi bien longitudinalement que transversalement par rapport à la nacelle 1.

Il est bien évidemment possible d'installer plus ou moins de trois systèmes de verrouillage selon l'invention.

Chaque système de verrouillage 20 comprend une chape 21 reliée au pylône 4 et une tringle 22 montée sur le capot mobile 8 et apte à s'engager avec la chape 21 lorsque ledit capot mobile 8 est en position de fermeture. Pour ce faire, la tringle 22 est montée mobile en translation selon un axe sensiblement parallèle au bord supérieur 13 du capot mobile 8 entre une position de verrouillage dans laquelle il est engagé avec la chape 21 et assure une liaison structurale entre le pylône 4 et le capot mobile 8, et une position de déverrouillage dans laquelle il est désengagé de la chape 21 et permet l'ouverture du capot mobile 8.

Il convient de noter que la structure arrière 7 comprenant un système d'inversion de poussée, celle-ci est intimement associée à la structure du turboréacteur 2. En effet, ce dernier, de par sa conception et utilisation, fait l'objet de déplacements relatifs par rapport à la structure de l'aéronef, et donc au pylône 4, en raison principalement d'un phénomène de dilatation thermique des pièces. Le système gorge 10 / couteau 11 est tout particulièrement sensible à ces effets.

Pour pallier cet inconvénient la chape 21 des systèmes de verrouillage 20 situés à proximité de la soufflante est reliée au pylône 4 par l'intermédiaire d'une liaison flottante au moyen d'une bielle 23 traversant le pylône 4 de manière à lier les systèmes de verrouillage 20 correspondant de chaque demi-partie 8, ladite bielle 23 pouvant se déplacer légèrement selon une direction transversale de la nacelle 1.

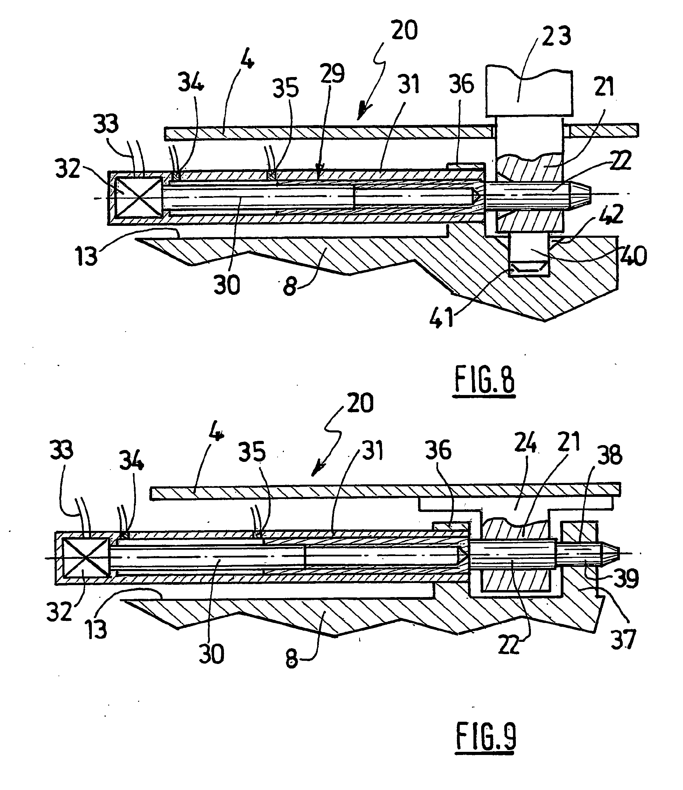

Un tel système flottant peut être installé pour tous les systèmes de verrouillage 20 ou seulement pour ceux situés le plus proche de la soufflante, un système de liaison fixe, comme représenté sur la figure 9, pouvant être utilisé pour les systèmes de verrouillage 20 suffisamment éloignés et moins sujets aux effets de dilation thermique.

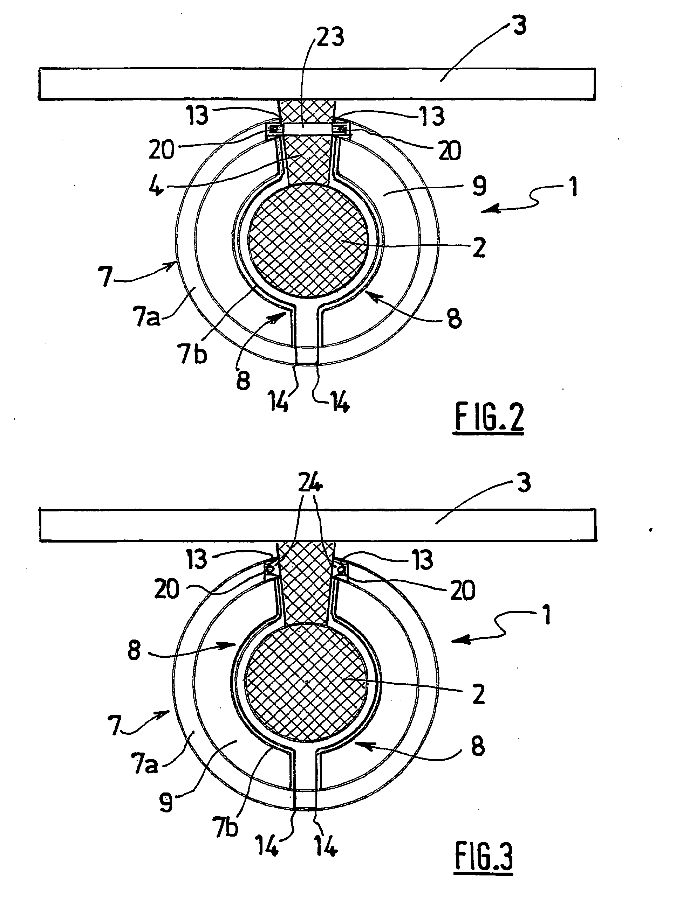

La figure 2 montre l'agencement d'une telle liaison flottante. Il convient de noter que la bielle 23 peut éventuellement être montée libre selon plus d'une direction et avoir certains degrés de liberté bloqués.

La figure 3 montre l'agencement d'une liaison fixe dans le pylône 4 par l'intermédiaire d'une ferrure 24.

Une première variante de réalisation d'un système de verrouillage. 20 selon l'invention est représenté sur les figures 4 et 5 respectivement en position d'engagement de la tringle 22 dans la chape 21 et de déverrouillage permettant l'ouverture du capot mobile 8.

La chape 21, montée sur la bielle 23 traversant le pylône 4, présente un canal 25 traversant destiné à recevoir la tringle 22 et présentant une entrée tronconique 26.

La présence de l'entrée tronconique 26 permet de pallier d'éventuels problèmes d'alignement de la bielle 23 d'une demi-partie 8 par rapport à une autre.

On notera que la bielle 23 de liaison est montée libre en déplacement selon une direction perpendiculaire au pylône 4, ce déplacement étant limité au moyen d'une butée périphérique 27, la valeur maximale du déplacement autorisé étant inférieure au diamètre maximum de l'entrée tronconique 26.

La tringle 22 correspondante est montée sur le capot mobile 8 à l'intérieur d'un fourreau 29 destiné à venir sensiblement en alignement avec le canal 25 traversant de la chape 21 lorsque le capot mobile 8 est en position de fermeture.

Ce fourreau 29 comprend un moyen d'entraînement en translation de la tringle, par exemple par un système vis 30 / écrou 31, associé à un composant de puissance 32 relié à une alimentation électrique 33. Le fourreau 29 est également équipé d'un premier capteur de position 34 et d'un deuxième capteur de position 35 de la tringle 22 connecté par liaison électrique à des moyens de signalisation (non visibles) de l'état de verrouillage ou de déverrouillage de la tringle 22.

On notera que le fourreau 29 peut comprendre une interface souple 36 appliquée entre celui-ci et le capot mobile 8 dans le but de permettre un meilleur alignement de la tringle 22 dans le canal 25 traversant de la chape 21, ceci afin de réduire tout sur contrainte dans le système de verrouillage 20 lors de la manoeuvre.

En fonctionnement, le système de verrouillage 20 selon l'invention permet également du s'assurer efficacement du bon verrouillage. En effet, si la tringle 22 est sortie du fourreau 29 avant fermeture du capot mobile 8, ladite tringle 22 vient en contact avec une partie externe de la bielle 23 ou de la chape 21 et le capot mobile 8 ne peut être totalement refermé autour du turboréacteur 2. Une obstruction éventuelle du canal 25 traversant de la chape 21 sera détectée grâce aux capteurs de position 34, 35 de la tringle 22 puisque cette dernière ne pourra pénétrer totalement dans le canal 25 de la chape 21.

Il convient également de noter que le capot mobile 8 de la structure d'inverseur comprend généralement une étanchéité à son interface avec le pylône 4. Cette étanchéité est assurée par des joints avantageusement en silicone armé. Ils procurent une résistance à la mise en contact sans contrainte du capot mobile 8 sur le pylône 4. Le déplacement possible de la bielle 23 ainsi que l'entrée tronconique 26 de la chape 21 doivent tenir compte de la valeur d'écrasement de ce joint.

Les moyens d'entraînement de la tringle 22 peuvent également comprendre une protection électronique associée contre les blocages, et comprendre une électronique de commande permettant la gestion des conditions de verrouillage avant actionnement de la tringle 22.

Le mode d'entraînement et de signalisation d'un tel système de verrouillage ne requiert pas une puissance électrique importante. Par conséquence la puissance utilisée en provenance de l'aéronef peut être faible, ce qui permet de réduire le risque de chocs électriques lors d'opérations de maintenance.

En fonctionnement, il convient d'appliquer de préférence une séquence de verrouillage commençant par les systèmes de verrouillage 20 de la présente invention avant les autres moyens de verrouillage notamment selon le bord inférieur 14 du capot mobile 8. L'ordre de verrouillage des systèmes de verrouillage 20 selon l'invention est indifférent.

Le fourreau 29 abritant la tringle 22 est situé dans une zone difficile d'accès du capot mobile 8. De ce fait, il peut difficilement faire l'objet de contrôles visuels et doit donc ne pas être sujet à réglages. Par ailleurs, pour une meilleure fiabilité du verrouillage, il conviendra de ne pas prévoir un jeu plus important entre la tringle 22 et la chape 21 que celui permettant le libre coulissement de la tringle 22 dans la chape 21 dit « jeu fonctionnel ».

Les systèmes de verrouillage 20 selon l'invention permettent un verrouillage sans contrainte et peuvent être utilisés également pour assurer le verrouillage suivant le bord inférieur 14 des capots mobiles 8. Dans un tel cas, l'un des capots mobiles 8 est équipé de la chape 21 tandis que l'autre est équipé de la tringle 22 mobile formant coulisseau.

On notera encore que d'autres types de sources de puissance peuvent être utilisées, notamment mécaniques par entraînement par câble. Dans un tel cas, on placera préférentiellement la zone d'actionnement du câble en partie inférieure de la nacelle.

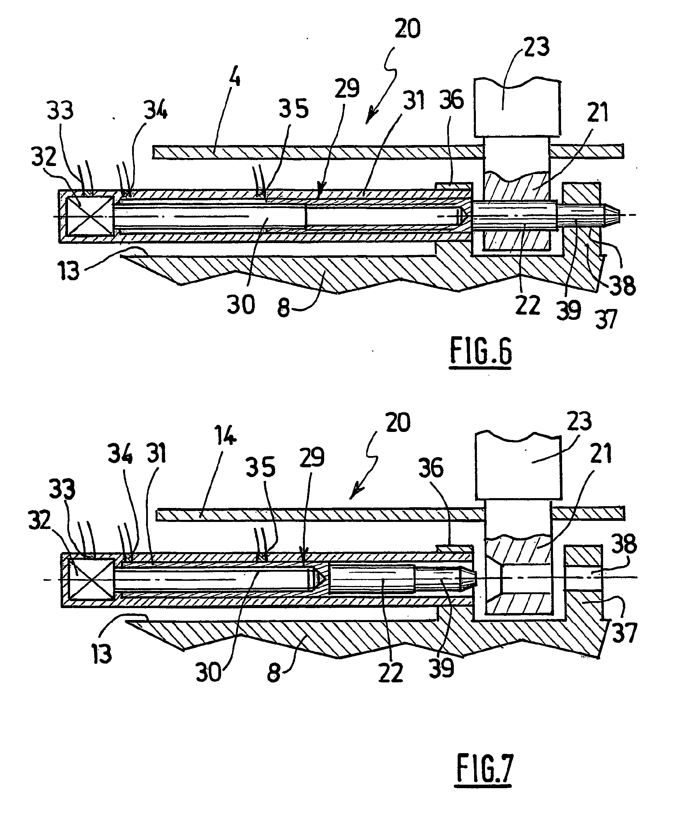

Les figures 6 et 7 présentent un deuxième mode de réalisation du système de verrouillage 20 selon l'invention.

Sur ces figures, le système de verrouillage 20 présente un oeillet 37 intégré ou rapporté à la structure de l'inverseur et présentant un passage 38 traversant orienté de manière à être aligné avec la tringle 22 et le canal 25 traversant de la chape 21. Ainsi, une extrémité 39 de la tringle 22 vient s'engager dans l'oeillet 37 après avoir traversé la chape 21 et assure de cette manière une meilleure tenue structurale. Plus précisément, la présence de cet oeillet 37 permet à la tringle 22 de ne plus travailler en flambage mais en cisaillement sous l'effet des contraintes s'exerçant sur ladite tringle 22 par l'intermédiaire de la chape 21.

L'extrémité de la tringle 22 destinée à pénétrer dans le passage de l'oeillet 37 pourra présenter un diamètre inférieur au diamètre du corps de la tringle 22.

Avantageusement, une interface souple peut être appliquée entre l'extrémité 39 de la tringle 22 et le passage 38 de manière à améliorer l'alignement de ladite tringle 22 et aider sa manoeuvre. Elle peut même, en association avec l'interface souple 36 du fourreau 29, amortir certains effets vibratoires et réduire les efforts de contact à l'interface tringle 22 / chape 21.

La figure 8 montre un troisième mode de réalisation d'un système de verrouillage selon l'invention, comprenant un pion de centrage 40 fixé sur la chape 21 et apte à coopérer avec un alésage 41 correspondant ménagé dans la structure du capot mobile 8. Avantageusement, donc un but de centrage, l'alésage 41 présente une entrée tronconique 42. Dans un tel cas, la bielle 23 présentera avantageusement un jeu selon une direction longitudinale du pylône 4.

Bien que l'invention ait été décrite avec des exemples particuliers de réalisation, il est bien évident qu'elle n'y est nullement limitée et qu'elle comprend tous les équivalents techniques des moyens décrits ainsi que leurs combinaisons si celles-ci entrent dans le cadre de l'invention.

## Revendications

1. Ensemble comprenant une nacelle (1) de turboréacteur (2) reliée à un pylône (4) d'un aéronef, ladite nacelle comprenant au moins un capot mobile (8) latéral équipé d'au moins un système de verrouillage (20), le capot mobile étant monté pivotant autour d'un axe sensiblement perpendiculaire à un axe longitudinal de la nacelle, ledit système de verrouillage comprenant, d'une part, une chape (21) reliée au pylône, et d'autre part, une tringle (22) montée sur le capot mobile et apte à s'engager avec la chape lorsque le capot mobile est en position de fermeture, **caractérisé en ce que** la tringle est montée mobile en translation relativement audit capot mobile le long d'un axe sensiblement longitudinal du capot mobile de manière à former un coulisseau apte à se déplacer entre une position de verrouillage dans laquelle il est engagé avec la chape et assure une liaison structurale entre le pylône et le capot mobile, et une position de déverrouillage dans laquelle il est désengagé de la chape et permet l'ouverture du capot mobile.

2. Ensemble selon la revendication 1, **caractérisé en ce que** la chape (21) du système de verrouillage (20) présente une entrée tronconique (26).

3. Ensemble selon l'une quelconque des revendications 1 ou 2, **caractérisée en ce que** le système de verrouillage (20) est équipé de moyens d'entraînement (30, 31, 32) de la tringle (22).

4. Ensemble selon la revendication 3, **caractérisé en ce que** le système de verrouillage (20) comprend des moyens mécaniques de commande à distance de la tringle.

5. Ensemble selon la revendication 3, **caractérisé en ce que** les moyens d'entraînement (30, 31, 32) de la tringle du système de verrouillage (20) comprennent au moins un élément de motorisation électrique (32).

6. Ensemble selon la revendication 5, **caractérisé en ce que** le système de verrouillage (20) comprend des moyens électriques de commande à distance de la tringle.

7. Ensemble selon l'une quelconque des revendications 1 à 6, **caractérisé en ce que** le système de verrouillage (20) comprend au moins un capteur de position (34, 35) de la tringle (22) apte à être relié à au moins un moyen de signalisation associé.

8. Ensemble selon l'une quelconque des revendications 1 à 7, **caractérisé en ce que** le système de verrouillage (20) comprend un oeillet (37) solidaire du capot mobile (8) et apte à recevoir une extrémité (39) de la tringle (22) lorsque celle-ci est en position de verrouillage et a traversé la chape (21).

9. Ensemble selon l'une quelconque des revendications 1 à 8, **caractérisé en ce que** la chape (21) du système de verrouillage (20) est associée à un pion de centrage (40) apte à coopérer avec un alésage (41) correspondant dans le capot mobile, de préférence présentant une entrée tronconique (42).

10. Ensemble selon l'une quelconque des revendications 1 à 9, **caractérisé en ce que** le capot mobile (8) de la nacelle (1) appartient à une structure d'inverseur de poussée.

11. Ensemble propulsif **caractérisé en ce qu'**il comprend un ensemble selon l'une quelconque des revendications 1 à 10 abritant un turboréacteur (2)

12. Ensemble selon l'une quelconque des revendications 1 à 10, **caractérisé en ce que** la chape (21) est liée au pylône (4) par l'intermédiaire d'une liaison flottante (23) apte à permettre un déplacement de jeu fonctionnel selon au moins une direction.

13. Ensemble selon la revendication 12, **caractérisé en ce que** le jeu fonctionnel maximum autorisé selon une direction transversale à la direction de déplacement de la liaison flottante (23) est inférieur au diamètre d'entrée de la chape (21).

## Claims

1. An assembly comprising a turbine jet engine (2) nacelle (1) connected to a pylon (4) of an aircraft, said nacelle comprising at least one lateral movable cowl equipped with at least one locking system (20), the movable cowl being pivotally mounted around an axis substantially perpendicular to a longitudinal axis of the nacelle, said locking system comprising a clevis (21) connected to the pylon on the one hand, and a rod (22) mounted on the movable cowl and capable of engaging with the clevis when the movable cowl is in a closing position on the other hand, **characterized in that** the rod is mounted so as to be translationally movable relatively to said movable cowl along a substantially longitudinal axis of the movable cowl, so as to form a slider capable of being displaced between a locking position in which it is engaged with the clevis and ensures a structural connection between the pylon and the mobile cowl, and an unlocking position in which it is disengaged from the clevis and allows the movable cowl to be opened.

2. The assembly according to claim 1, **characterized in that** the clevis (21) of the locking system (20) has a frusto-conical inlet (26).

3. The assembly according to any of claims 1 or 2, **characterized in that** the locking system (20) is equipped with means (30, 31, 32) for driving the rod (22).

4. The assembly according to claim 3, **characterized in that** the locking system (20) comprises mechanical means for remote control of the rod.

5. The assembly according to claim 3, **characterized in that** the means (30, 31, 32) for driving the rod of the locking system (20) comprise at least one electric motorization element (32).

6. The assembly according to claim 5, **characterized in that** the locking system (20) comprises electric means for remote control of the rod.

7. The assembly according to any of claims 1 to 6, **characterized in that** the locking system (20) comprises at least one position sensor (34, 35) for the rod (22) capable of being connected to at least one associated signaling means.

8. The assembly according to any of claims 1 to 7, **characterized in that** the locking system (20) comprises an eyelet (37) integral with the movable cowl (8) and capable of receiving one end (39) of the rod (22) when the latter is in a locking position and has crossed the clevis (21).

9. The assembly according to any of claims 1 to 8, **characterized in that** the clevis (21) of the locking system (20) is associated with a centering pin (40) capable of cooperating with a corresponding bore (41) in the movable cowl (8), preferably having a frusto-conical inlet (42).

10. The assembly according to any of claims 1 to 9, **characterized in that** the movable cowl (8) of the nacelle (1) belongs to a thrust-inverter structure.

11. A propulsive assembly, **characterized in that** it comprises an assembly according to any of claims 1 to 10, harboring a turbine jet engine (2).

12. The assembly according to any of claims 1 to 10, **characterized in that** the clevis (21) is connected to the pylon (4) via a floating connection (23) capable of allowing a functional play displacement along at least one direction.

13. The assembly according to claim 12, **characterized in that** the maximum allowed functional play along a direction transverse to the direction of displacement of the floating connection (23) is less than the inlet diameter of the clevis (21).

## Patentansprüche

1. Gruppe, die eine Gondel (1) eines Turbotriebswerks (2) umfasst, die mit einem Mast (4) eines Luftfahrzeugs verbunden ist, wobei die Gondel mindestens eine bewegliche seitliche Verkleidung (8) umfasst, die mit mindestens einem Verschlusssystem (20) ausgestattet ist, wobei die bewegbare Verkleidung schwenkbar um eine zu einer Längsachse der Gondel etwa senkrechte Achse montiert ist, wobei das Verschlusssystem einerseits einen mit dem Mast verbundenen Gabelkopf (21) umfasst und andererseits ein auf der beweglichen Verkleidung montiertes Gestänge (22), das imstande ist, in den Gabelkopf einzugreifen, wenn sich die bewegliche Verkleidung in geschlossener Stellung befindet, **dadurch gekennzeichnet, dass** das Gestänge relativ zur Verkleidung entlang einer etwa Längsachse der beweglichen Verkleidung derart verschiebbar beweglich montiert ist, dass eine Gleitführung gebildet wird, die imstande ist, sich zwischen einer Verschlussstellung, in der sie in den Gabelkopf eingreift und eine strukturelle Verbindung zwischen dem Mast und der beweglichen Verkleidung absichert, und einer Freigabestellung, in der sie den Gabelkopf freigibt und das Öffnen der beweglichen Verkleidung erlaubt, zu verschieben.

2. Gruppe nach Anspruch 1, **dadurch gekennzeichnet, dass** der Gabelkopf (21) des Verschlusssystems (20) einen kegelstumpfartigen Eingang (26) aufweist.

3. Gruppe nach einem der Ansprüche 1 oder 2, **dadurch gekennzeichnet, dass** das Verschlusssystem (20) mit Antriebsmitteln (30, 31, 32) des Gestänges (22) ausgestattet ist.

4. Gruppe nach Anspruch 3, **dadurch gekennzeichnet, dass** das Verschlusssystem (20) mechanische Mittel für die Fernbedienung des Gestänges umfasst.

5. Gruppe nach Anspruch 3, **dadurch gekennzeichnet, dass** die Antriebsmittel (30, 31, 32) des Gestänges des Verschlusssystems (20) mindestens ein elektrisches Motorisierungselement (32) umfassen.

6. Gruppe nach Anspruch 5, **dadurch gekennzeichnet, dass** das Verschlusssystem (20) elektrische Mittel für die Fernbedienung des Gestänges umfasst.

7. Gruppe nach einem der Ansprüche 1 bis 6, **dadurch gekennzeichnet, dass** das Verschlusssystem (20) mindestens einen Positionssensor (34, 35) des Gestänges (22) umfasst, der imstande ist, mit mindestens einem zugeordneten Signalmittel verbunden zu sein.

8. Gruppe nach einem der Ansprüche 1 bis 7, **dadurch gekennzeichnet, dass** das Verschlusssystem (20) eine mit der beweglichen Verkleidung (8) verbundene Öse (37) umfasst, die imstande ist, ein Ende (39) des Gestänges (22) aufzunehmen, wenn sich dieses in Verschlussstellung befindet und den Gabelkopf (21) durchquert hat.

9. Gruppe nach einem der Ansprüche 1 bis 8, **dadurch gekennzeichnet, dass** der Gabelkopf (21) des Verschlusssystems (20) mit einem Zentrierstift (40) verbunden ist, der imstande ist, mit einer entsprechenden Bohrung (41) in der beweglichen Verkleidung zusammenzuarbeiten, die vorzugsweise einen kegelstumpfartigen Eingang (42) aufweist.

10. Gruppe nach einem der Ansprüche 1 bis 9, **dadurch gekennzeichnet, dass** die bewegliche Verkleidung (8) der Gondel (1) zu einer Schubumkehrstruktur gehört.

11. Antriebsgruppe, **dadurch gekennzeichnet, dass** sie eine Gruppe nach einem der Ansprüche 1 bis 10 umfasst, die ein Turbotriebwerk (2) aufnimmt.

12. Gruppe nach einem der Ansprüche 1 bis 10, **dadurch gekennzeichnet, dass** der Gabelkopf (21) mit dem Mast (4) über eine schwimmende Verbindung (23) verbunden ist, die imstande ist, eine funktionelle Spielverschiebung in mindestens eine Richtung zu erlauben.

13. Gruppe nach Anspruch 12, **dadurch gekennzeichnet, dass** das in eine transversale Richtung zur Richtung der Verschiebung der schwimmenden Verbindung (23) maximal genehmigte funktionelle Spiel kleiner ist als der Eingangsdurchmesser des Gabelkopfes (21).
